# EUROPEAN PATENT SPECIFICATION

(11) **EP 4 215 374 B1**
(45) Date of publication and mention of the grant of the patent: **26.03.2025**
(21) Application number: 22152461.4
(22) Date of filing: 20.01.2022
(51) Int. Cl.: B41J 29/02, F16F 7/10, G03B 27/42, B41J 29/08

(54) **INKJET PRINTING APPARATUS AND INKJET PRINTING METHOD**
TINTENSTRAHLDRUCKVORRICHTUNG UND TINTENSTRAHLDRUCKVERFAHREN
APPAREIL ET MÉTHODE D'IMPRESSION À JET D'ENCRE

(43) Date of publication of application: 26.07.2023
(73) Proprietor: Canon Production Printing Holding B.V., 5914 HH Venlo (NL)
(72) Inventor: VAN BOMMEL, Ton A.J.J., Venlo (NL); ROSENBOOM, Fabian T., Venlo (NL)
(74) Representative: Canon Production Printing IP Department

(56) References cited:
- EP-A2- 0 929 177
- US-A1- 2002 179 806
- US-A1- 2009 122 284
- US-A1- 2010 089 712
- US-A1- 2016 238 953
- US-B2- 10 649 347
- US-B2- 8 480 206

## Description

### BACKGROUND OF THE INVENTION

### 1. Field of the invention

The invention relates to a printing system and to a method of inkjet printing and an inkjet printing system.

### 2. Description of Background Art

Printing systems for large format media generally comprise a print head support member, often in the form of a wide beam, extending over a medium support surface. A print head assembly mounted on a carriage reciprocally moves along said print head support member to print an image on the medium support surface. Such printing systems may be e.g. flatbed printers or large format web printers. The movement of the print head carriage and/or the displacement of the print head support member may result in vibrations in the print head support member, which negatively affect the print quality, as these result in an undesired displacement of the print head assembly with respect to the print medium. Such vibrational problems are also known to occur in printing system with a page-wide print head assembly, which is mounted stationary on its print head support, though therein the vibrations originate from different components of the system, such as the print medium transport system and/or the ink supply system. It is known to reduce such vibrations by adjusting the stiffness and/or mass of the beam. This however increases the complexity of the beam, resulting in greater costs. A conventional inkjet printing system is known from US 8 480 206 B2.

### SUMMARY OF THE INVENTION

It is an object of the invention to provide an alternative manner of improving the image quality in a printing method and/or printing system, specifically with regard to vibration issues.

In accordance with the present invention, a method according to claim 1 and a printing system according to claim 7 are provided. This method of inkjet printing an image on a print medium supported on a medium support surface comprises the steps of:
- moving the print medium and a print head assembly with respect to one another, resulting in a vibration in a print head support member, which print head support member extends over the medium support surface and which print head support member supports the print head assembly;
- detecting the vibration in the print head support member by means of a sensor;
- controlling an actuator based on the sensed vibration to exert a force on the print head support member to dampen the vibration in the print head support member by at least partially transferring the vibration in the print head support member to a vibration absorption body; and
- inkjet printing an image on the print medium by means of the print head assembly. The vibration sensor continuously senses the vibration in the print head support member, which may be in the form of a first beam, during printing. Based thereon, control of the actuator is continuously adjusted to apply a force on the print head support member, which force effectively transfers vibrational energy from the print head support member to the vibration absorption body. In this manner, vibrations in the print head support member can be reduced without significant adjustments to the print head support member itself. Thereby the object of the present invention has been achieved.

More specific optional features of the invention are indicated in the dependent claims.

In an embodiment, the vibration is continually detected during use and the exerted force is continually adjusted by passing the detected vibration through a predetermined control loop stored on a controller. The frequency and/or amplitude of the vibration in the print head support member may change over time and the controller is configured to adjust control of the actuator accordingly. A control loop is stored on the controller, for example in the form of a algorithm or electronic circuit. This ensures that any changes in the vibration are taken into account.

In an embodiment, the control loop is configured to apply the exerted force at a frequency substantially anti-phase to the detected vibration. Applying an anti-phase signal is an effective method of dampening a vibration. The exerted force is applied substantially 180° out-of-phase with the vibration in the print head support member, as determined by the vibration sensor. The control loop is further configured to determine a suitable force amplitude to dampen the vibration.

In an embodiment, the control loop is further configured to correct the exerted force to compensate for a delay time required by the controller to determine the exerted force from the detected vibration. A certain delay time passes between the sensing of the vibration and the actuation of the actuator. The control loop has been configured to correct for this delay time, for example by adjusting the phase of an actuator control signal by a factor corresponding to the delay time. Said delay time may vary and this adjustment may be performed dynamically, for example by means of a suitable filter in the control loop.

In an embodiment, the force exerted by the actuator is applied in a contactless manner, preferably via electromagnetic force transfer. A one-way transfer of vibrational energy from the print head support member to the vibration absorption body is preferred. This may be achieved by a contactless actuator. Electromagnetic forces work well in this regard and allow for such a one-way transfer.

The invention further relates to an inkjet printing system comprising:
- a print head support member extending over a medium support surface and supporting an inkjet print head assembly;
- a vibration sensor for detecting a vibration in the print head support member;
- an actuator positioned between the print head support member and a vibration absorption body;
- a controller configured to receive data from the vibration sensor and to control the actuator to at least partially transfer the vibration from the print head support member to the vibration absorption body.

The vibration sensor is provided on the print head support member, which may for example be formed as a first beam, on which the print head assembly is mounted, either moveably or in a stationary manner. The vibration sensor senses the vibration in the print head support member and transmits the corresponding sensor data to the controller. Based upon said sensor data the controller determines a control signal for driving the actuator, such that vibrational energy is transferred from the print head support member to the vibrational absorption body. Preferably the vibrational absorption body and the actuator are configured such that the transfer of vibrational energy is substantially one-way, resulting in a dampening of the vibration in the print head support member.

In one embodiment, the first beam may be a carriage support beam along which the print head carriage is translatable in a scanning direction for swath-wise printing an image. In a second embodiment, the print head support member supports and/or holds a page-wide print head array. The page-wide print head is stationary during printing and its width defines the maximum width of the printable image. In an embodiment, the print head support member comprises a first beam, which extends perpendicularly to the direction wherein the print head assembly and the print medium move with respect to one another.

In an embodiment, the vibration absorption body comprises a second beam and/or plate parallel to the first beam. The vibrational absorption body is preferably not directly mounted on the first beam to prevent an undesired return of vibrational energy to the first beam. A second beam may be mounted on opposite sides of the medium support surface without interfering in the print operation. The dimensions of the second beam may be selected to form a mass-damper system tuned to the main vibrational modes of the first beam (e.g. its eigenfrequencies). It is also common that a second beam is provided for supporting the cable connection between the controller and the print head carriage, such that this second beam may be provided with the dual function of cable support and vibration absorption.

In an embodiment, the controller is provided with a control loop to continually determine a suitable control signal for the actuator based in the detected vibration. The control loop may be formed by an electronic circuit and/or computer program. In this manner, any changes determined by the vibration sensor are constantly corrected, resulting in an efficient dampening system.

In an embodiment, the control loop is configured apply the force exerted by the actuator substantially in anti-phase with the detected vibration. Preferably, the control loop is further configured to correct a timing of the force for a delay time between the detection of the vibration and the application the control signal. This ensure that the applied force is anti-phase with the current vibration and efficiently dampens the vibration.

In an embodiment, the actuator is configured for electromagnetic transfer of forces between the print head support member, which preferably in the form of the first beam, and the vibration absorption body. An electromagnetic actuator may be contactless and prevents an undesired return of vibrational energy to the print head support member. The actuator may comprise an electromagnetic field generator which can move a magnetic element without direction contact. By mounting the generator on the first beam and the magnetic element on the vibrational body (or vice versa), the return of vibrational energy to the print head support member is prevented or reduced. Preferably, the actuator comprises a Lorentz force motor, as commonly known in the state of the art.

In an embodiment, the vibration sensor and/or the actuator are positioned halfway along a length of the print head support member, which is preferably the first beam. It was found that the dampening works best when sensed and applied halfway along the length of the first beam. It will appreciated that additional sensors and actuator may be applied.

In an embodiment, the vibration sensor and/or actuator are positioned on an opposite side of the print head support member, specifically of the first beam, with respect to the print head assembly. The actuator (and preferably the vibration absorption body) are an opposite side of the print head support member than the print head assembly or carriage. This allows the carriage to move unhindered.

Further scope of applicability of the present invention will become apparent from the detailed description given hereinafter. However, it should be understood that the detailed description and specific examples, while indicating preferred embodiments of the present invention, are given by way of illustration only.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a schematic, perspective view of a flatbed printing system;
Fig. 2 is a schematic, perspective view of a roll printing system;
Fig. 3 is a schematic, top-down view of a first embodiment of a printing system according to the present invention;
Fig. 4 is a schematic, cross-sectional view of an actuator from the printing system in Fig. 3;
Fig. 5 is a schematic, front view of a second embodiment of a printing system according to the present invention;
Fig. 6 is a block diagram illustrating the step of the method according to the present invention; and
Fig. 7 is a graph representing the sensor data and control signal applied in the printing system in Fig. 4.

### DETAILED DESCRIPTION OF THE PREFERRED EMBODIMENTS

The present invention will now be described with reference to the accompanying drawings, wherein the same reference numerals have been used to identify the same or similar elements throughout the several views.

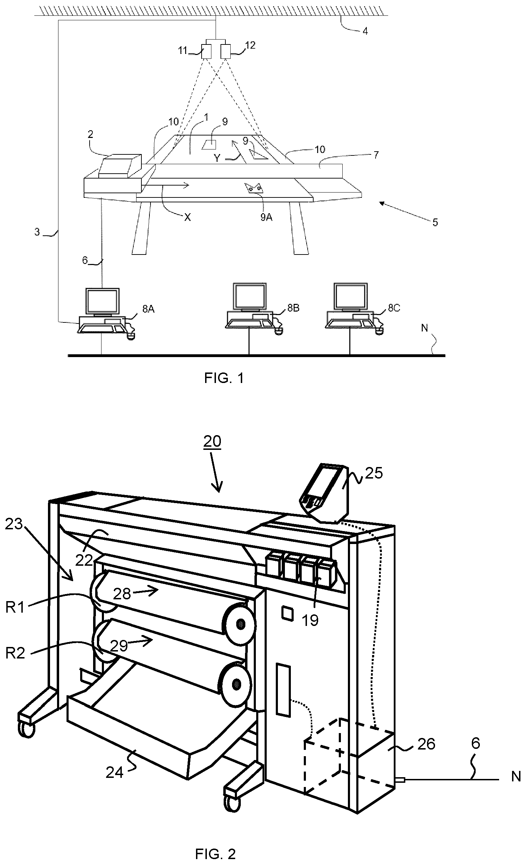

Fig. 1 is a so-called 'flatbed' printing system 5 as known in the prior art. The printing system 5 comprises a number of workstations 8B, 8C, which may be personal computers or other devices for preparing image data for prints to be printed. These workstations have access to a network N for transferring print jobs comprising the image data to a print controller 8A that is configured to receive the print jobs for prints and derive pass images. The print controller 8A may be part of the printing system 5 connected to a control unit of the printing system 5 via a connection 6. The printing system 5 further comprises a print head 2 attached to an armature 7 for applying colorants, for example cyan (C), magenta (M), yellow (Y), black (K) and white (W) colorant, or varnish to pieces 9, 9A of flat print media placed on a flatbed surface 1 in order to obtain a printed image. The armature 7 may be a first beam above the flat bed surface 1 as shown in Fig. 1 or a robot arm (not shown) moving in a plurality of directions over the flat bed surface 1. The flatbed surface 1 is the surface of the flatbed which is at least partially printable by the print head 2. The pieces of media may be so small that they are completely placed on the flatbed surface 1, but a piece of media which is larger than the flatbed surface, in which case an image which is going to cover the whole piece of media must be printed into a plurality of parts of the image, is not excluded. A first piece 9A has already been printed upon, while the other pieces 91, 92 are not provided with any recording material yet. The print head 2 reciprocally scans the flatbed surface 1 in the second direction X along the first beam 7 perpendicular to a first direction Y of the first beam 7 over the flatbed surface 1 along guiding parts 10. During printing of an image on the piece 9, 9A of media the piece 91, 92, 9A of media is not moved on the flatbed surface 1. Movement of the first beam 7 in the first direction Y may results in vibrations in said beam 7, which affect the positioning of ink droplets by the print head carriage 2. Such vibrations may also be caused by the reciprocating movement of the print head carriage 2 along the first beam 7.

Fig. 2 illustrates a roll printing system 20, wherein the print media 28, 29 are supplied as webs from respective rolls R1, R2 in a supply device 23 to an output tray 24 in cut form or to a take-up roll (not shown for re-winding. The rollers R1, R2 are driven to move the print media 28, 29 along the first beam (inside the housing). The first beam in this case is stationary, while the print head carriage translates along the first beam. Generally the images are printed stepwise, wherein the print medium 28, 298 is moved a step in between printing swaths. Like in Fig. 1, the image quality may be negatively affected by vibrations in first beam. The roll printing system 20 may be controlled via a local user interface 25 or by means of a controller 26 which receives data from a network N via a connection 6.

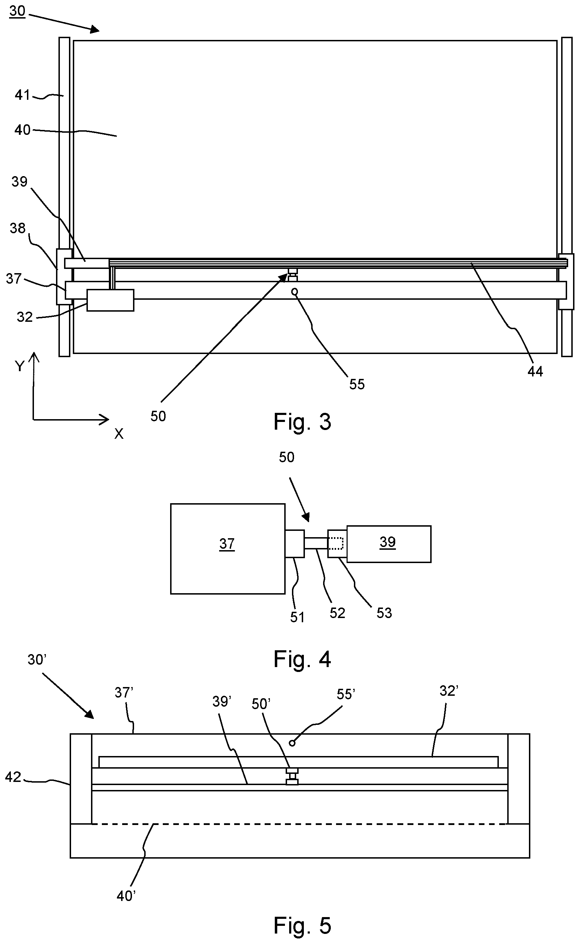

Fig. 3 illustrates a printing system 30 according to the present invention. The printing system 30 is embodied as a flatbed printing system similar to Fig. 1, but the present invention may also be applied to a roll printer 20 as in Fig. 2. The printing system 30 comprises a medium support surface 40 in the form of a table. The medium support surface 40 is provided with a plurality of suction holes in fluid connection to a suction force for applying an underpressure to a print medium on the medium support surface 40 for holding it flat and in position. A print head support member 37 in the form of a first beam extends in the second direction Y (commonly referred to as the scanning direction Y) over the width of the medium support surface 40. The first beam 37 is moveably supported on a guide system 41 in the form of guide rails. A drive 38 is provided to move the first beam 37 along the guide system 41 in the first direction Y, which is perpendicular to the scanning direction Y. Any suitable drive and guide may be applied, such as a rack and pinion drive, linear drive motor, etc. The print head assembly 32 is provided as a print head carriage, which moves reciprocally along the first beam 37 in the scanning direction Y. The print head carriage 32 holds a plurality of print heads for jetting ink droplets onto the print medium for forming a swath of an image during a pass of the print head carriage 32 along the first beam 37. The print head carriage is controlled via a controller by means of a connection 44, which in Fig. 3 is illustrated as a cable connection. The cable connection 44 is configured to fold and/or roll-up with the movement of the print head carriage 32. The cable connection 44 is supported on a second beam 39, which also acts as a vibration absorption body. It will be appreciated that the connection between the controller and the print head carriage 32 may also be wireless.

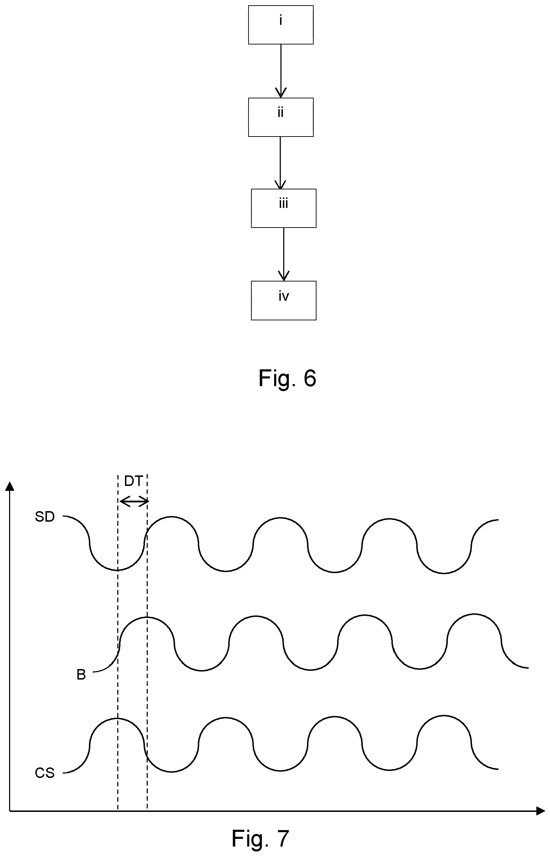

The second beam 39 extends parallel and adjacent to the first beam 37. An actuator 50 is positioned between the first and second beams 37, 39 for transferring forces between them. The first beam 37 is provided with a vibration sensor 55 for detecting vibrations in the first beam 37. Any suitable vibration sensor may be applied, such as an accelerometer. The vibration sensor 55 transmits sensor data to the controller, which is configured for processing said data into a control signal for the actuator 50. By means of a predetermined control loop, the controller converts the sensor data into a control signal by which the actuator 50 at least partially transfers the vibration from the first beam 37 to the second beam 39. The determination of the control signal will be discussed in detail with regard to Figs. 5 and 6, but the actuator 50 substantially applies an anti-phase force to the first beam 37. The applied force is substantially in anti-phase with the current vibration in the first beam 37. In consequence vibrational energy is efficiently diverted from the first beam 37 to the second beam 39. The second beam 37 herein is one example of a vibration absorption body. Preferably, such a vibration absorption body is suitably configured to absorb and hold the vibrational energy from the first beam 37, without it returning to the first beam 37. The vibration absorption body may for example be configured as a tuned mass-damper system tuned to e.g. an eigenfrequency of the first beam 37. The vibration sensor 55 and the actuator 50 are preferably applied in the middle of the first beam 37 in the scanning direction Y, though multiple sensors and actuator may be also be applied. The vibration sensor 55 and the actuator 50 are on the other side of the first beam 37 than the print head carriage 32.

To prevent vibrational energy from returning from the second beam 39 to the first beam 37, the actuator is preferably configured as a contactless, electromagnetic actuator 50, as shown in Fig. 4. The actuator 50, which may be a Lorentz force motor, comprises two mounts 51, 53. Each mount 51, 53 is attached to its respective beam 37, 39. One of the mounts 51, 53 is provided with a current driven electromagnetic field generator, for example a coil, while the other mount 51, 53 comprises a magnetic element 52, for example a bar magnet. By forcing a current through the coil, a force is applied to the magnetic element 52 and transmitted via the mount 51, 53 to the respective beam 37, 39 without direct contact. This prevent vibrations from the second beam 39 from returning to the first beam 37.

Fig. 5 illustrates a print system 30' with a page-wide print head assembly 32'. The page-wide print head assembly 32' extends as an array over substantially the full width of the medium support surface 40'. The medium support surface 40' is provided with through-holes to apply an underpressure to the print medium. The medium support surface 40' may for example be a stationary plate over which the print medium passes by means of a transport system (not shown) or be part of an endless belt, which adheres and transports the print medium. It will be appreciated that multiple print media may be provided besides one another on the medium support surface 40'. The vibration absorption body 39' in Fig. 5 is formed as a pretensioned plate. The plate 39' is mounted on the same bases 42 as the print head support member 37', which is in the shape of a first beam 37'. The materials, dimensions, and pretension in the plate 39' may be attuned to certain harmonics of the first beam 37'. The vibration sensor 55' is mounted on the first beam 37' and is used to control the actuator 50'. Since vibrational energy is directed into the plate 39' the first beam 37' is prevented from excessively vibrating.

Fig. 6 illustrates the steps of the method of printing an image on a print medium. The print medium is supported on a medium support surface, such as the one's described in Figs. 1 to 3. The steps are performed during the execution of a print job, wherein the print head carriage 32 moves along the first beam 37 to print consecutive swaths of an image on a print medium. In a first step i, a vibration in a first beam 37 extending over the medium support surface 40 is detected by means of a vibration sensor 55. The vibration sensor 55 generates sensor data which is transmitted to the controller. In step ii the controller determines based on the sensor data a control signal for driving the actuator. This is illustrated in Fig. 7, which shows a chart wherein the horizontal axis is the time axis and the vertical axis illustrates the relative amplitude or intensity. The top graph in Fig. 7 represents the sensor data SD as measured by the vibration sensor 55. This reflects the current vibration in the first beam 37. This vibration is continuously measured (which may include constant or intermittent measurements), though only a short portion of the sensor data SD is shown in Fig. 7. To dampen this vibration, the controller in step iii applies a control loop or algorithm configured to generate a substantially anti-phase control signal CS. However, a certain delay time DT is required or taken for transmitting the sensor data SD to the controller and processing it. Merely inverting the phase of the sensor data SD would thus result in graph B, which shows a signal which would be anti-phase with the sensor data SD were it not for the shift caused by the delay time DT. To compensate for this the controller is configured to correct for this delay time DT, thereby arriving at the control signal CS, shown in the bottom graph. The delay time DT may be compensated in several ways, e.g. by a predetermined phase shift and/or by applying a low-pass filter in the control algorithm or loop. This results in a control signal CS which is substantially anti-phase with the sensor data SD, and thus with the actual vibration in the first beam 37. In consequence, in step iv vibrational energy is efficiently transferred to the vibration absorption body. As described above this transfer is designed to be one-way only to prevent vibrational energy from returning to the first beam 37.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The invention is defined in the appended claims.

## Claims

1. A method of inkjet printing an image on a print medium supported on a medium support surface (40, 40'), the method comprising the steps of :
- moving the print medium and a print head assembly (32, 32') with respect to one another, resulting in a vibration in a print head support member (37, 37'), which print head support member (37, 37') extends over the medium support surface (40, 40') and which print head support member (37, 37') supports the print head assembly (32, 32');
- detecting the vibration in the print head support member (37, 37') by means of a vibration sensor (55, 55'),
**characterised in that** the method further comprises the steps of:
- controlling an actuator (50, 50') based on the sensed vibration to exert a force on the print head support member (37, 37') to dampen the vibration in the print head support member (37, 37') by at least partially transferring the vibration in the print head support member (37, 37') to a vibration absorption body (39, 39'); and
- inkjet printing an image on the print medium by means of the print head assembly (32, 32').

2. The method according to claim 1, wherein the step of moving comprises reciprocally moving the print head assembly (32, 32') along a first beam of the print head support member (37, 37'), and wherein the step of transferring comprises at last partially transferring the vibration to the vibration absorption body (39, 39') mounted on a second beam and/or plate different from the first beam.

3. The method according to claim 2, wherein the vibration is continually detected during use and the exerted force is continually adjusted by passing the detected vibration through a predetermined control loop stored on a controller.

4. The method according to claim 3, wherein the control loop is configured to apply the exerted force at a frequency substantially anti-phase to the detected vibration.

5. The method according to claim 4, wherein the control loop is further configured to correct the exerted force to compensate for a delay time required by the controller to determine the exerted force from the detected vibration.

6. The method according to any of the previous claims, wherein the force exerted actuator (50, 50') is applied in a contactless manner, preferably via electromagnetic force transfer.

7. An inkjet printing system (30) comprising:
- a print head support member (37, 37') extending over a medium support surface (40, 40') and supporting an inkjet print head assembly (32, 32');
- a vibration sensor (55, 55') for detecting a vibration in the print head support member (37, 37'),
**characterised in that** the inkjet printing system (30) further comprises:
- an actuator (50, 50') positioned between the print head support member (37, 37') and a vibration absorption body (39, 39');
- a controller configured to receive data from the vibration sensor (55, 55') and to control the actuator (50, 50') to at least partially transfer the vibration from the print head support member (37, 37') to the vibration absorption body (39, 39').

8. The printing system (30) according to claim 7, wherein the print head support member (37, 37') comprises a first beam, and wherein the vibration absorption body (39, 39') comprises a second beam and/or plate (37, 37') different from and parallel to the first beam.

9. The printing system (30) according to claim 8, wherein the print head assembly (32, 32') is mounted on a carriage reciprocally movable along the first beam of the print head support member (37, 37').

10. The printing system (30) according to any of claims 7 to 9, wherein the controller is provided with a control loop to continually determine a suitable control signal for the actuator (50, 50') based in the detected vibration.

11. The printing system (30) according to claim 10, wherein the control loop is configured apply the force exerted by the actuator (50, 50') substantially in anti-phase with the detected vibration.

12. The printing system (30) according to claim 11, wherein the control loop is configured to correct a timing of the force for a delay time between the detection of the vibration and the application the control signal.

13. The printing system (30) according to any of the claims 7 to 11, wherein the actuator (50, 50') is configured for electromagnetic transfer of forces between the print head support member (37, 37') and the vibration absorption body (39, 39'), preferably wherein the actuator (50, 50') comprises a Lorentz force motor.

14. The printing system (30) according to any of the claims 7 to 13, wherein the vibration sensor (55, 55') and/or the actuator (50, 50') are positioned halfway along a length of the print head support member (37, 37').

15. The printing system (30) according to any of the claim 7 to 14, wherein the vibration sensor (55, 55') and/or actuator (50, 50') are positioned on an opposite side of the print head support member (37, 37') with respect to the print head assembly (32, 32').

## Patentansprüche

1. Ein Verfahren zum Tintenstrahldrucken eines Bildes auf ein Druckmedium, das auf einer Medienträgeroberfläche (40, 40') getragen wird, wobei das Verfahren die folgenden Schritte umfasst::
- Bewegen des Druckmediums und einer Druckkopfanordnung (32, 32') in Bezug aufeinander, was zu einer Vibration in einem Druckkopfträgerelement (37, 37') führt, wobei sich das Druckkopfträgerelement (37, 37') über die Medienträgerfläche (40, 40') erstreckt und das Druckkopfträgerelement (37, 37') die Druckkopfanordnung (32, 32') trägt;
- Erfassen der Vibration in dem Druckkopfträgerelement (37, 37') mittels eines Vibrationssensors (55, 55'); **dadurch gekennzeichnet, dass** das Verfahren ferner die folgenden Schritte umfasst
- Steuern eines Aktuators (50, 50') auf der Grundlage der erfassten Schwingung, um eine Kraft auf das Druckkopfträgerelement (37, 37') auszuüben, um die Schwingung in dem Druckkopfträgerelement (37, 37') zu dämpfen, indem die Schwingung in dem Druckkopfträgerelement (37, 37') zumindest teilweise auf einen Schwingungsabsorptionskörper (39, 39') übertragen wird; und
- Tintenstrahldrucken eines Bildes auf dem Druckmedium mit Hilfe der Druckkopfeinheit (32, 32').

2. Verfahren nach Anspruch 1, wobei der Schritt des Bewegens das Hin- und Herbewegen der Druckkopfanordnung (32, 32') entlang eines ersten Trägers des Druckkopfträgerelements (37, 37') umfasst, und wobei der Schritt des Übertragens zumindest teilweise das Übertragen der Vibration auf den Vibrationsabsorptionskörper (39, 39') umfasst, der an einem zweiten Träger und/oder einer zweiten Platte angebracht ist, die sich vom ersten Träger unterscheidet.

3. Verfahren nach Anspruch 2, bei dem die Vibration während des Gebrauchs kontinuierlich erfasst wird und die ausgeübte Kraft kontinuierlich angepasst wird, indem die erfasste Vibration durch einen vorbestimmten Regelkreis geleitet wird, der in einem Steuergerät gespeichert ist.

4. Verfahren nach Anspruch 3, wobei der Regelkreis so konfiguriert ist, dass er die ausgeübte Kraft mit einer Frequenz aufbringt, die im Wesentlichen gegenphasig zu der erfassten Schwingung ist.

5. Verfahren nach Anspruch 4, wobei der Regelkreis ferner so konfiguriert ist, dass er die ausgeübte Kraft korrigiert, um eine Verzögerungszeit zu kompensieren, die die Steuerung benötigt, um die ausgeübte Kraft aus der erfassten Vibration zu bestimmen.

6. Verfahren nach einem der vorhergehenden Patentansprüche, wobei die Kraftausübung des Aktuators (50, 50') berührungslos, vorzugsweise durch elektromagnetische Kraftübertragung, erfolgt.

7. Ein Tintenstrahldrucksystem (30), das Folgendes umfasst:
- ein Druckkopfträgerelement (37, 37'), das sich über eine mittlere Trägerfläche (40, 40') erstreckt und eine Tintenstrahldruckkopfanordnung (32, 32') trägt;
- einen Vibrationssensor (55, 55') zum Erfassen einer Vibration in dem Druckkopfträgerelement (37, 37'), **dadurch gekennzeichnet, dass** das Tintenstrahldrucksystem (30) ferner umfasst:;
- einen Aktuator (50, 50'), der zwischen dem Druckkopfträger (37, 37') und einem Vibrationsabsorptionskörper (39, 39') angeordnet ist;
- eine Steuerung, die so konfiguriert ist, dass sie Daten von dem Vibrationssensor (55, 55') empfängt und den Aktuator (50, 50') steuert, um die Vibration zumindest teilweise von dem Druckkopfträgerelement (37, 37') auf den Vibrationsabsorptionskörper (39, 39') zu übertragen.

8. Das Drucksystem (30) nach Anspruch 7, wobei das Druckkopfträgerelement (37, 37') einen ersten Träger umfasst und wobei der Vibrationsabsorptionskörper (39, 39') einen zweiten Träger und/oder eine zweite Platte (37, 37') umfasst, die sich von dem ersten Träger unterscheidet und parallel zu diesem verläuft.

9. Das Drucksystem (30) nach Anspruch 8, wobei die Druckkopfanordnung (32, 32') auf einem Schlitten montiert ist, der entlang des ersten Trägers des Druckkopfträgerelements (37, 37') hin- und herbewegt werden kann.

10. Das Drucksystem (30) nach einem der Patentansprüche 7 bis 9, wobei die Steuerung mit einem Regelkreis versehen ist, um kontinuierlich ein geeignetes Steuersignal für das Stellglied (50, 50') auf der Grundlage der erfassten Schwingung zu bestimmen.

11. Das Drucksystem (30) nach Anspruch 10, wobei der Regelkreis so konfiguriert ist, dass er die von dem Stellglied (50, 50') ausgeübte Kraft im Wesentlichen gegenphasig zu der erfassten Vibration aufbringt.

12. Das Drucksystem (30) nach Anspruch 11, wobei der Regelkreis so konfiguriert ist, dass er ein Timing der Kraft für eine Verzögerungszeit zwischen der Erfassung der Vibration und der Anwendung des Steuersignals korrigiert.

13. Drucksystem (30) nach einem der Patentansprüche 7 bis 11, wobei der Aktuator (50, 50') zur elektromagnetischen Übertragung von Kräften zwischen dem Druckkopfträger (37, 37') und dem Vibrationsabsorptionskörper (39, 39') konfiguriert ist, wobei der Aktuator (50, 50') vorzugsweise einen Lorentzkraftmotor umfasst.

14. Das Drucksystem (30) nach einem der Patentansprüche 7 bis 13, wobei der Vibrationssensor (55, 55') und/oder das Stellglied (50, 50') auf halber Länge des Druckkopfträgerelements (37, 37') angeordnet sind.

15. Drucksystem (30) nach einem der Patentansprüche 7 bis 14, wobei der Vibrationssensor (55, 55') und/oder der Aktuator (50, 50') auf einer gegenüberliegenden Seite des Druckkopfträgerelements (37, 37') in Bezug auf die Druckkopfanordnung (32, 32') angeordnet sind.

## Revendications

1. Procédé d'impression à jet d'encre d'une image sur un support d'impression reposant sur une surface de support (40, 40'), le procédé comprenant les étapes suivantes :
- déplacer le support d'impression et un ensemble de tête d'impression (32, 32') l'un par rapport à l'autre, ce qui entraîne une vibration dans un élément de support de tête d'impression (37, 37'), lequel élément de support de tête d'impression (37, 37') s'étend sur la surface de support (40, 40') et lequel élément de support de tête d'impression (37, 37') supporte l'ensemble de tête d'impression (32, 32') ;
- détecter la vibration dans l'élément de support de la tête d'impression (37, 37') au moyen d'un capteur de vibration (55, 55') ; **caractérisé en ce que** la méthode comprend en outre les étapes suivantes
- commander un actionneur (50, 50') en fonction de la vibration détectée pour exercer une force sur l'élément de support de la tête d'impression (37, 37') afin d'amortir la vibration dans l'élément de support de la tête d'impression (37, 37') en transférant au moins partiellement la vibration dans l'élément de support de la tête d'impression (37, 37') à un corps d'absorption des vibrations (39, 39') ; et
- impression à jet d'encre d'une image sur le support d'impression au moyen de l'ensemble tête d'impression (32, 32').

2. Procédé selon la revendication 1, dans lequel l'étape de déplacement comprend le déplacement réciproque de l'ensemble tête d'impression (32, 32') le long d'une première poutre de l'élément de support de la tête d'impression (37, 37'), et dans lequel l'étape de transfert comprend le transfert au moins partiel de la vibration au corps d'absorption des vibrations (39, 39') monté sur une deuxième poutre et/ou plaque différente de la première poutre.

3. Procédé selon la revendication 2, dans lequel la vibration est continuellement détectée pendant l'utilisation et la force exercée est continuellement ajustée en faisant passer la vibration détectée par une boucle de contrôle prédéterminée stockée sur un contrôleur.

4. Procédé selon la revendication 3, dans lequel la boucle de régulation est configurée pour appliquer la force exercée à une fréquence sensiblement antiphasique par rapport à la vibration détectée.

5. Procédé selon la revendication 4, dans lequel la boucle de régulation est en outre configurée pour corriger la force exercée afin de compenser un temps de retard nécessaire au contrôleur pour déterminer la force exercée à partir de la vibration détectée.

6. Procédé selon l'une quelconque des revendications précédentes, dans lequel la force exercée actionneur (50, 50') est appliquée sans contact, de préférence par transfert de force électromagnétique.

7. Système d'impression à jet d'encre (30) comprenant :
- un élément de support de tête d'impression (37, 37') s'étendant sur une surface de support (40, 40') et supportant un ensemble de tête d'impression à jet d'encre (32, 32') ;
- un capteur de vibrations (55, 55') pour détecter une vibration dans l'élément de support de la tête d'impression (37, 37'), **caractérisé en ce que** le système d'impression à jet d'encre (30) comprend en outre: ;
- un actionneur (50, 50') placé entre l'élément de support de la tête d'impression (37, 37') et un corps d'absorption des vibrations (39, 39') ;
- un contrôleur configuré pour recevoir des données du capteur de vibrations (55, 55') et pour commander l'actionneur (50, 50') afin de transférer au moins partiellement les vibrations de l'élément de support de la tête d'impression (37, 37') au corps d'absorption des vibrations (39, 39').

8. Système d'impression (30) selon la revendication 7, dans lequel l'élément de support de la tête d'impression (37, 37') comprend une première poutre, et dans lequel le corps d'absorption des vibrations (39, 39') comprend une deuxième poutre et/ou plaque (37, 37') différente de la première poutre et parallèle à celle-ci.

9. Système d'impression (30) selon la revendication 8, dans lequel l'ensemble tête d'impression (32, 32') est monté sur un chariot mobile en va-et-vient le long de la première poutre de l'élément de support de la tête d'impression (37, 37').

10. Le système d'impression (30) selon l'une des revendications 7 à 9, dans lequel le contrôleur est doté d'une boucle de commande pour déterminer en permanence un signal de commande approprié pour l'actionneur (50, 50') sur la base de la vibration détectée.

11. Système d'impression (30) selon la revendication 10, dans lequel la boucle de régulation est configurée pour appliquer la force exercée par l'actionneur (50, 50') sensiblement en anti-phase avec la vibration détectée.

12. Système d'impression (30) selon la revendication 11, dans lequel la boucle de régulation est configurée pour corriger une synchronisation de la force pour un temps de retard entre la détection de la vibration et l'application du signal de commande.

13. Système d'impression (30) selon l'une quelconque des revendications 7 à 11, dans lequel l'actionneur (50, 50') est configuré pour un transfert électromagnétique des forces entre l'élément de support de la tête d'impression (37, 37') et le corps d'absorption des vibrations (39, 39'), de préférence dans lequel l'actionneur (50, 50') comprend un moteur à force de Lorentz.

14. Système d'impression (30) selon l'une quelconque des revendications 7 à 13, dans lequel le capteur de vibrations (55, 55') et/ou l'actionneur (50, 50') sont positionnés à mi-chemin sur une longueur de l'élément de support de la tête d'impression (37, 37').

15. Le système d'impression (30) selon l'une quelconque des revendications 7 à 14, dans lequel le capteur de vibrations (55, 55') et/ou l'actionneur (50, 50') sont positionnés sur un côté opposé de l'élément de support de la tête d'impression (37, 37') par rapport à l'ensemble tête d'impression (32, 32').
